# EUROPÄISCHE PATENTSCHRIFT

(11) **EP 0 674 157 B1**
(45) Veröffentlichungstag und Bekanntmachung des Hinweises auf die Patenterteilung: **12.04.2000**
(21) Anmeldenummer: 95100454.8
(22) Anmeldetag: 14.01.1995
(51) Int. Cl.: G01F 23/24

(54) **Verfahren zur Erkennung mindestens einer physikalischen Messgrösse**
Method for detecting at least one physical quantity
Procédé pour détecter au moins une quantité physique

(30) Priorität: 24.03.1994 DE 4410186
(43) Veröffentlichungstag der Anmeldung: 27.09.1995
(73) Patentinhaber: Volkswagen Aktiengesellschaft, 38436 Wolfsburg (DE)
(72) Erfinder: Altenkirch, Manfred, Dipl.-Ing., D-38553 Wasbüttel (DE)

(56) Entgegenhaltungen:
- EP-A- 0 205 798
- EP-A- 0 446 418
- WO-A-92/03833
- DE-A- 2 939 355
- DE-A- 3 426 885
- DE-A- 4 016 970
- PATENT ABSTRACTS OF JAPAN vol. 018 no. 125 (P-1701) ,28.Februar 1994 & JP-A-05 312619 (TOYOTA MOTOR CORP;OTHERS: 02) 22.November 1993,

## Beschreibung

Die Erfindung betrifft ein Verfahren zum Erkennen zweier physikalischer Meßgrößen einer Flüssigkeit mit einer ein temperaturabhängiges Widerstandselement aufweisenden Schaltungsanordnung, welche eine elektrische Leistungsquelle und eine Ablaufsteuerung enthält, die das Widerstandselement zumindest während einer definierten Zeitperiode tP mit der Leistungsquelle verbindet, sowie mit einer Auswerteschaltung, welche einen sich zumindest in der definierten Zeitperiode tP ändernden Spannungsabfall über das Widerstandselement erfaßt, wobei mittels der Ablaufsteuerung während einer ersten Zeitspanne tS dem Widerstandselement eine elektrische Leistung L mit einem ersten Wert L1 zugeführt wird, anschließend während der definierten Zeitperiode tP eine elektrische Leistung L mit einem vom ersten Wert L1 verschiedenen zweiten Wert L2 auf das Widerstandselement geschaltet wird und der sich dadurch ändernde Spannungsabfall als elektrische Größe erfaßt und gespeichert wird und in der Auswerteschaltung die zeitliche Änderung der elektrischen Größe bestimmt und zur Erkennung eines Füllstandes der Flüssigkeit herangezogen wird, gemäß dem Oberbegriff des einzigen Anspruchs.

Aus der EP-02 05 798 A1 ist eine Anordnung zur Erfassung zweier physikalischer Meßgrößen, hier der Öltemperatur einer Brennkraftmaschine und des Füllstandes dieses Öles, bekannt, in welcher diese Meßgrößen mittels eines ersten und eines zweiten temperaturabhängigen Widerstandselementes erfaßt werden. Das zweite Widerstandselement taucht ständig zur Temperaturerfassung in das Öl ein, während das erste Widerstandselement zur Füllstandserkennung dient. Dabei wird durch das Eintauchen bzw. Nichteintauchen dieses ersten Widerstandselementes lediglich das Unterschreiten eines vorbestimmten Füllstandes angezeigt. Um die Schaltschwelle einer den Widerstandselementen zugeordneten Auswerteschaltung an Umgebungstemperaturschwankungen anzupassen, wird vorgeschlagen, durch manuellen Tastendruck vor dem Starten der Brennkraftmaschine den Füllstand zu kontrollieren, wobei gleichzeitig das zweite, eingetauchte Widerstandselement diese Schaltschwelle der Umgebungstemperatur nachführt.
Nachteilig bei dieser Ausführung ist es, daß eine vergleichsweise aufwendige Schaltung erforderlich ist, in welcher zwei, insbesondere für einen Großserieneinsatz relativ teure, Widerstandselemente verbaut sind.

Eine Schaltungsanordnung zur Füllstandserkennung mit einem einzigen Widerstandselement ist aus der gattungsgemäßen EP-01 39 874 B1 bekannt. Hierbei ist eine Ablaufsteuerung vorgesehen, die in einer festgelegten zeitlichen Abfolge einen als PTC-Element ausgebildeten Füllstandsfühler mittels einer als Stromquelle ausgebildeten Leistungsquelle und einem Schalter bestromt. Diese Ablaufsteuerung soll durch während einer Abtastperiode vorgenommenes Heizen des Fühlers und anschließendes Abkühlen und Bilden eines Spannungswertquotienten die Füllstandamessung weitgehend unabhängig von Störeinflüssen halten, ohne dafür ein gesondertes Kompensationselement zu benötigen.

Ein weiterer Füllstandgeber ist aus der EP 0 446 418 A1 bekannt. Hier wird die Veränderung eines Sondensignals einer Meßzeit ausgewertet und das Sondensignal einem Eingang eines Analog/Digital-Wandlers zugeführt. Während einer vorbestimmten Meßzeit wird die Sonde mit einem elektrischen Strom beaufschlagt und am Ende der Meßzeit wird ein Spannungsanstieg δU gemessen und ausgewertet.

Aus der DE 29 39 355 A1 ist ein gattungsgemäßes Verfahren zur Niveauerkennung bekannt, bei dem mit einem einzigen elektrischen Heizelement mit temperaturabhängigem elektrischen Widerstand eine Füllstandsmessung durchgeführt wird, welche unabhängig von einer Temperatur eines überwachten Mediums ist. Hierzu ist ein Heizintervall und ein Kühlintervall vorgesehen. Während eines jeden Heizintervalls erwärmt sich das Heizelement auf eine durch die Wärmeleitfähigkeit und auch durch die Mediumtemperatur beeinflußte Heiztemperatur. Ein dementsprechender elektrischer Widerstand des Heizelementes wird gemessen. Zusätzlich fühlt das Heizelement im Kühlintervall in Annäherung die jeweilige Mediumtemperatur ab. Der entsprechende Widerstandswert dient als Bezugsbasis bei der Niveaukontrolle im nachfolgenden Heizintervall, so daß die Mediumtemperatur auf das Niveausignal keinen Einfluß hat.

Der Erfindung liegt die Aufgabe zugrunde, ein Verfahren zur Erkennung physikalischer Meßgrößen anzugeben, welches in besonders einfacher Weise zwei Meßgrößen erfaßt.

Die Lösung dieser Aufgabe gelingt mit den Merkmalen des einzigen Patentanspruches.

Mit dem erfindungsgemäßen verfahren gelingt mit nur einem einzigen temperaturabhängigen Widerstandselements sowohl die Messung der aktuell in der Flüssigkeit vorliegenden Temperatur als auch die Überprüfung des Füllstandes. Die Ablaufsteuerung schaltet dafür während einer definierten Zeitperiode den Wert der dem Widerstandselemt zugeführten Leistung von einem ersten auf einen davon verschiedenen zweiten Wert. Anschließend wird der zeitliche Verlauf des sich durch den geänderten Wert einstellenden Temperaturverlaufes dazu herangezogen, ob ein bestimmter Flüssigkeitspegel vorliegt oder nicht. Die Länge der Zeitperiode kann dabei so kurz gewählt werden, daß kein nennenswerter Einfluß auf die weitere, nach der Zeitperiode liegende Temperaturmessung erkennbar ist oder dieser zu vernachlässigen ist. Besonders vorteilhaft ist das Verfahren daher zum Beispiel in Brennkraftmaschinen oder Getrieben von Kraftfahrzeugen anzuwenden. Unter Vermeidung eines vergleichsweisen teuren, zweiten Widerstandselementes kann häufig ein zur Temperaturerkennung bereits vorhandenes Widerstandselement zusätzlich zur Füllstandserkennung herangezogen werden. Dieser Kostenvorteil ist insbesondere bei Großserienherstellung relevant und kommt darüber hinaus der zur Erzielung langfristiger Service-Intervalle notwendigen Überwachung von Temperatur und Füllstand entgegen.

Erfindungsgemäß wird der während der Zeitperiode vorliegende Wert der zugeführten Leistung getaktet, wodurch sich verbesserte Möglichkeiten zur Auswertung ergeben. Infolge der Taktung läßt sich an mehreren Stützstellen auf die Temperatur schließen, woraus sich die Temperaturdifferenz nach einer bestimmten Zeit oder die Zeit bis zum Erreichen einer bestimmten Temperaturdifferenz oder der Gradient der Temperaturänderung ermitteln läßt.

Als Leistungsquelle lassen sich sowohl Strom- wie auch Spannungsquellen verwenden, wobei im Falle einer Spannungsquelle bevorzugt als sich ändernde elektrische Größe der Spannungsabfall über einen in Reihe zum Widerstandselement liegenden Festwiderstand gemessen wird, der sich in Folge des veränderlichen Widerstandes des zum Beispiel als NTC-Fühler ausgebildeten, temperaturabhängigen Widerstandselementes einstellt. Bei Verwendung einer Stromquelle wird bevorzugt die über dem NTC-Fühler abfallende Spannung erfaßt.
Die das temperaturabhängige Widerstandselement enthaltende Schaltungsanordnung weist eine Ablaufsteuerung und eine Auswerteschaltung auf. Bei Verwendung einer Stromquelle wird von der Ablaufsteuerung beispielsweise ein Schalter im gewünschten Zeittakt geöffnet bzw. geschlossen, der eine zusätzliche Stromquelle parallel zu einer ersten Stromquelle schaltet. Bei Verwendung einer Spannungsquelle wird beispielsweise ein parallel zu dem Festwiderstand liegender Schalter getaktet betätigt.

Die Erfindung wird nachfolgend anhand einer Zeichnung beispielhaft näher erläutert. Es zeigen:
- Fig. 1: schematisch eine Schaltungsanordnung mit einer Stromquelle als Leistungsquelle,
- Fig. 2: schematisch eine Schaltungsanordnung mit einer Spannungsquelle als Leistungsquelle,
- Fig. 3: qualitativ den zeitlichen Verlauf der zugeführten Leistung,
- Fig. 4: qualitativ den zeitlichen Verlauf der gemessenen Temperatur,
- Fig. 5: qualitativ den zeitlich getakteten Verlauf der zugeführten Leistung bei einem anderen Widerstandselement und
- Fig. 6: qualitativ den zeitlichen Verlauf der gemessenen Temperatur an dem anderen Widerstandselement.

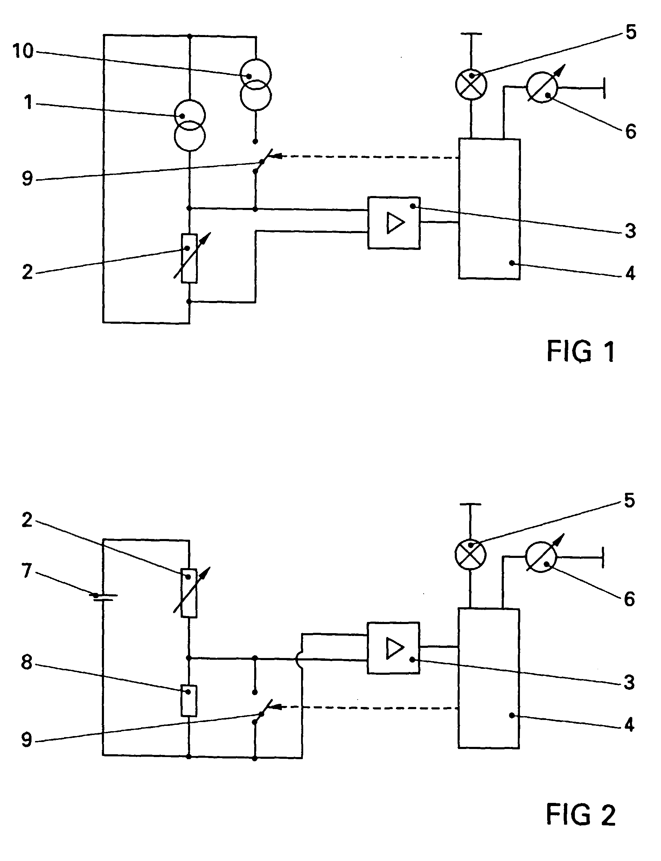

Eine Schaltungsanordnung zur Erkennung von Temperatur und Füllstand als physikalische Meßgrößen einer Flüssigkeit, zum Beispiel eines Getriebeöles in einem Kraftfahrzeug, weist als Leistungsquelle gemäß Figur 1 eine Stromquelle 1 auf, welche ein temperaturabhängiges Widerstandselement 2, zum Beispiel einen fremderwärmten Heißleiter (NTC), bestromt. Infolge dieser Bestromung verändert sich der Widerstand des Elementes 2 und die über diesem Element 2 abfallende elektrische Spannung wird als sich ändernde elektrische Größe einem Operationeverstärker 3 zugeführt, welcher wiederum mit einem Mikroprozessor 4 verbunden ist. In diesem Mikroprozessor 4 ist eine Ablaufsteuerung für den zeitlichen Ablauf des erfindungegemäßen Verfahrens sowie eine Auswerteschaltung integriert. An dem Mikroprozessor 4 sind eine Signallampe 5 und ein Temperaturanzeigegerät 6 angeschlossen.

Alternativ dazu kann gemäß Figur 2 die Leistungsquelle als Spannungsquelle 7 ausgebildet sein. Hierbei ist ein Festwiderstand 8 in Reihe zum Widerstandselement 2 geschaltet und die über dem Festwiderstand 8 abfallende Spannung wird als sich ändernde elektrische Größe erfaßt.

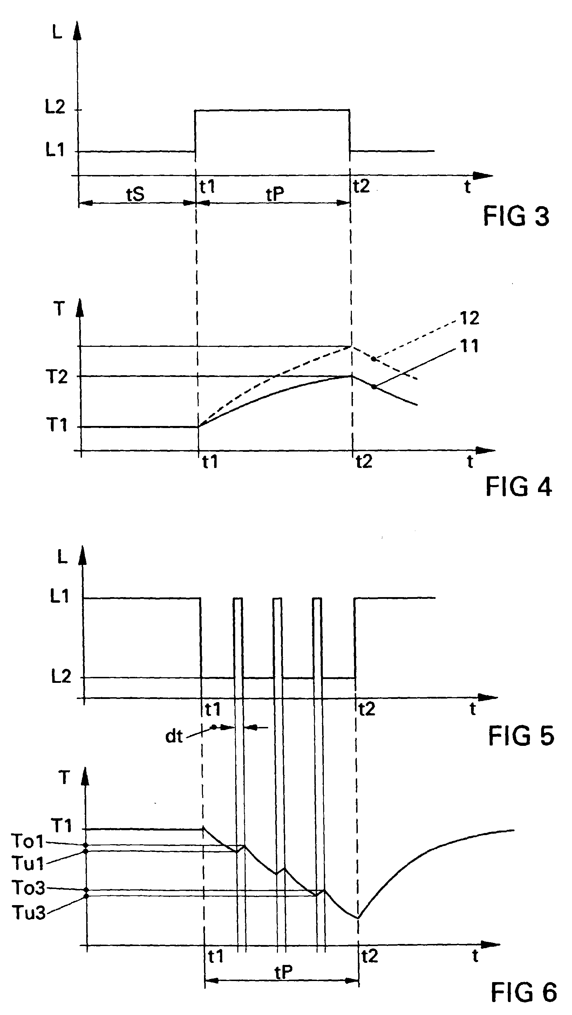

Das Verfahren läuft wie folgt ab. Zunächst wird das Widerstandselement 2 während einer ersten Zeitspanne tS von der Leistungsquelle mit einer Leistung L versorgt, welche einen ersten Wert L1 aufweist. Diese Zeitspanne tS ist mindestens so groß, daß sich konstante Verhältnisse am Widerstandselement 2 eingestellt haben. Das Temperaturanzeigegerät 6 zeigt in diesem Zustand ein dem erfaßten Spannungsabfall am Widerstandselement 2 entsprechenden ersten Temperaturwert T1 an, zeigt also ständig die aktuelle Öltemperatur. Zu einem Zeitpunkt t1 betätigt der Mikroprozessor 4 einen Schalter 9, so daß sich die zugeführte Leistung während einer Zeitperiode tP auf einen zweiten Wert L2 verändert. Gemäß Figur 1 und 3 kann zum Beispiel eine weitere Stromquelle 10 zugeschaltet werden, wodurch sich die zugeführte Leistung L auf den Wert L2 erhöht. Infolge der im Widerstandselement 2 umgesetzten höheren Leistung steigt dessen Temperatur und sein Widerstand nimmt ab. Der zum Ende der ersten Zeitspanne tS vorliegende Temperaturwert T1 wird im Mikroprozessor 4 gespeichert, und für die Dauer der Zeitperiode tP, zum Beispiel 3 sec, dem Temperaturanzeigegerät 6 zugeführt.
Die Größe des Temperaturanstieges des Widerstandselementes 2 hängt davon ab, ob es in das Öl eintaucht oder ob es von Luft umgeben ist. Der zu einem weiteren Zeitpunkt t2 am Ende der Zeitperiode tP erreichte zweite Temperaturwert t2 ist im eingetauchten Zustand aufgrund der verbesserten Wärmeabfuhr niedriger als in Luft. In Figur 4 ist der dementsprechende Temperaturverlauf im eingetauchten Zustand mit durchgezogener Linie 11, im anderen Fall gestrichelt durch Linie 12 dargestellt.

Die Auswertung kann anschließend dadurch erfolgen, daß die Differenz aus den zu den Zeitpunkten t1 und t2 vorliegenden Temperatur- bzw. Spannungswerten gebildet wird und diese mit einem im Mikroprozessor 4 gespeicherten Referenzwert verglichen wird. Dieser Referenzwert kann beispielsweise die für das verwendete Widerstandselement 2 charakteristische Temperaturerhöhung an Luft innerhalb einer bestimmten Zeitdauer sein. Bei Abweichung der ermittelten Differenz um einen bestimmten Betrag von diesem Referenzwert wird die Signallampe 5 vom Mikroprozessor 4 betätigt und somit das Unterschreiten eines bestimmten Füllstandes signalisiert. Nach Ablauf der Zeitperiode tP schaltet die Ablaufsteuerung zurück auf den ursprünglichen Leistungswert L1 und das Temperaturanzeigegerät 6 signalisiert erneut die aktuell erfaßte Flüssigkeitstemperatur.

Sollte aus Gründen des Aufbaus der Schaltungsanordnung mit einem anderen Widerstandselement 2 oder aufgrund der vorherrschenden Meßbedingungen ein relativ hoher Wert für die Leistung L erforderlich sein, so kann gemäß Figur 5 in der Zeitspanne tS ein hoher Wert L1 anliegen, während die Ablaufsteuerung in der Zeitperiode tP zum Beispiel durch Öffnen des Schalters 9 gemäß Figur 1 den niedrigen Leistungswert L2 einstellt. Im übrigen gilt das zuvor gesagte bezüglich des Ablaufes.

In beiden zuvor beschriebenen Ausführungsformen ist es erfindungsgemäß vorgesehen, den in der Zeitperiode tP zugeführten Leistungswert zu takten, wie es schematisch in Figur 5 dargestellt ist.
Hierfür wird von der Ablaufsteuerung zwischen den Zeitpunkten t1 und t2 mehrfach kurzfristig vom Wert L2 auf den Wert L1 umgeschaltet. Die dabei entstehenden, kurzfristigen Zeitfenster dt dienen als Stützstellen zur Bestimmung des Fühlstandes. Die Dauer der Zeitfenster dt ist ausreichend zur Erzielung von auswertbaren Temperaturänderungen am Widerstandselement 2, wie in Figur 6 dargestellt. Die jeweils beim Wechsel vom ersten auf den zweiten bzw. vom zweiten auf den ersten Wert L1 bzw. L2 vorliegenden Temperaturwerte werden als unterer bzw. oberer Wert tu1,2,... bzw. to1,2,... gespeichert und der Auswerteschaltung zugeführt. Somit stehen zusätzliche Möglichkeiten zur Auswertung bereit, beispielsweise durch Speichern von zwei Werten to1 tu3 und Berechnung des vorliegenden Temperaturgradienten.

## Patentansprüche

1. Verfahren zum Erkennen zweier physikalischer Meßgrößen einer Flüssigkeit mit einer ein temperaturabhängiges Widerstandselement aufweisenden Schaltungsanordnung, welche eine elektrische Leistungsquelle und eine Ablaufsteuerung enthält, die das Widerstandselement zumindest während einer definierten Zeitperiode tP mit der Leistungsquelle verbindet, sowie mit einer Auswerteschaltung, welche einen sich zumindest in der definierten Zeitperiode tP ändernden Spannungsabfall über das Widerstandselement erfaßt, wobei mittels der Ablaufsteuerung während einer ersten Zeitspanne tS dem Widerstandselement eine elektrische Leistung L mit einem ersten Wert L1 zugeführt wird, anschließend während der definierten Zeitperiode tP eine elektrische Leistung L mit einem vom ersten Wert L1 verschiedenen zweiten Wert L2 auf das Widerstandselement geschaltet wird und der sich dadurch ändernde Spannungsabfall als elektrische Größe erfaßt und gespeichert wird und in der Auswerteschaltung die zeitliche Änderung der elektrischen Größe bestimmt und zur Erkennung eines Füllstandes der Flüssigkeit herangezogen wird, **dadurch gekennzeichnet**, daß während der ersten Zeitspanne tS die Leistung L1 zugeführt wird, bis sich konstante Verhältnisse am Widerstandselement eingestellt haben und somit die Temperatur T der Flüssigkeit als elektrische Größe in der Schaltungsanordnung erfaßt und gespeichert wird, daß der während der definierten Zeitperiode tP erfaßte Spannungsabfall gespeichert wird, daß während der Zeitperiode tP der Wert der zugeführten Leistung L mehrfach für ein Zeitfenster dt vom zweiten L2 auf den ersten Wert L1 umgeschaltet wird, wobei das Zeitfenster dt kürzer ist als tP, daß der Wert des sich ändernden spannungsabfalls jeweils beim Wechsel vom ersten Wert L1 bzw. zweiten Wert L2 auf den zweiten Wert L2 bzw. den ersten Wert L1 gespeichert und der Auswerteschaltung zugeführt wird und daß die Differenz von mindestens zwei der gespeicherten Werte in ein Verhältnis zu der zwischen der Erfassung dieser Werte liegenden Zeitdauer gesetzt wird.

## Claims

1. Method for detecting two physical measurable variables of a liquid, having a circuit arrangement comprising a temperature-dependent resistance element, which circuit arrangement contains an electrical power source and a sequence control, which sequence control connects the resistance element to the power source at least during a defined time period tP, and having an evaluation circuit which determines a voltage drop across the resistance element, which drop changes at least in the defined time period tP, wherein by means of the sequence control electrical power L with a first value L1 is supplied to the resistance element during a first time span tS, then during the defined time period tP, electrical power L with a second value L2 different to the first value L1 is connected to the resistance element and the voltage drop which changes as a result of this is determined and stored as an electrical variable and the change in the electrical variable with respect to time is determined in the evaluation circuit and used to recognise a filling level of the liquid, characterised in that during the first time span tS the power L1 is supplied until constant conditions have been set in the resistance element and therefore the temperature T of the liquid is determined and stored as an electrical variable in the circuit arrangement, that the voltage drop determined during the defined time tP is stored, that during the time period tP the value of the supplied power L is switched over from the second value L2 to the first value L1 a number of times for a time window dt, wherein the time window dt is shorter than tP, that the value of the changing voltage drop is stored in each case of a change from the first value L1 to the second value L2 or from the second value L2 to the first value L1 and is supplied to the evaluation circuit and that the difference in at least two of the stored values is placed into a ratio with respect to the time duration lying between the determination of these values.

## Revendications

1. Procédé destiné à la détection de deux grandeurs de mesure physiques d'un liquide avec un circuit comportant un élément de résistance dépendant de la température, lequel contient une source de puissance électrique et une commande séquentielle qui relie l'élément de résistance à la source de puissance, au moins pendant une période de temps tP définie, ainsi qu'avec un circuit d'évaluation qui, par l'intermédiaire de l'élément de résistance, détecte une chute de tension se modifiant au moins durant la période de temps tP définie, une puissance électrique L d'une première valeur L1 étant amenée pendant un premier laps de temps tS à l'élément de résistance au moyen de la commande séquentielle, une puissance électrique L d'une deuxième valeur L2 différente de la première valeur L1 étant ensuite appliquée à l'élément de résistance pendant la période de temps tP définie, et la chute de tension se modifiant de ce fait étant détectée en tant que grandeur électrique et mémorisée, et la variation dans le temps de la grandeur électrique étant déterminée dans le circuit d'évaluation et utilisée pour la détection d'un niveau du liquide, **caractérisé en ce que**, pendant le premier laps de temps tS, la puissance L1 est amenée jusqu'à ce que des conditions constantes se soient instaurées au niveau de l'élément de résistance, et que la température T du liquide soit de ce fait détectée et mémorisée dans le circuit en tant que grandeur électrique, en ce que la chute de tension détectée pendant la période de temps définie tP est mémorisée, en ce que la valeur de la puissance L amenée pendant la période de temps tP est commutée pour une fenêtre de temps dt à plusieurs reprises de la deuxième valeur L2 sur la première valeur L1, la fenêtre de temps dt étant plus courte que tP, en ce que la valeur de la chute de tension se modifiant est à chaque fois mémorisée lors du passage de la première valeur L1 ou de la deuxième valeur L2 à la deuxième valeur L2 ou à la première valeur L1 et transmise au circuit d'évaluation, et en ce que la différence d'au moins deux des valeurs mémorisées est mise en rapport avec la durée de temps se situant entre la détection de ces valeurs.
